**Europäisches Patentamt**

**European Patent Office**

**Office européen des brevets**

(11) Veröffentlichungsnummer: **0 191 119**
**B1**

(12) **EUROPÄISCHE PATENTSCHRIFT**

(45) Veröffentlichungstag der Patentschrift:
**05.10.88**

(51) Int. Cl.⁴: **B 01 F 7/16,** B 02 C 18/12

(21) Anmeldenummer: **85101418.3**

(22) Anmeldetag: **11.02.85**

(54) **Universalmaschine.**

(43) Veröffentlichungstag der Anmeldung:
**20.08.86 Patentblatt 86/34**

(45) Bekanntmachung des Hinweises auf die Patenterteilung:
**05.10.88 Patentblatt 88/40**

(84) Benannte Vertragsstaaten:
**AT BE CH DE FR GB IT LI NL SE**

(73) Patentinhaber: **A. Stephan u. Söhne GmbH & Co,**
**Stephanplatz 2, D-3250 Hameln (DE)**

(72) Erfinder: **Otto, Friedrich, Reuterweg 21,**
**D-3250 Hameln 1 (DE)**

(74) Vertreter: **Gramm, Werner, Prof. Dipl.-Ing. et al,**
**Patentanwälte Gramm + Lins**
**Theodor-Heuss-Strasse 2, D-3300 Braunschweig (DE)**

(56) Entgegenhaltungen:
BE - A - 887 389
CH - A - 168 973
CH - A - 172 939
CH - A - 187 653
DE - A - 1 454 075
DE - C - 356 323
FR - A - 808 626
FR - A - 1 277 007
FR - A - 1 393 466
FR - A - 1 411 702
FR - A - 1 517 736
FR - A - 1 542 577
FR - A - 2 223 074
FR - A - 2 276 800
GB - A - 2 119 635
NL - A - 6 615 139
US - A - 1 707 891

(56) Entgegenhaltungen: (Fortsetzung)
US - A - 1 930 948
US - A - 2 309 249
US - A - 2 508 460
US - A - 2 571 316
US - A - 2 861 785
US - A - 2 894 551
US - A - 2 894 551
US - A - 3 047 186
US - A - 3 166 255
US - A - 3 250 519
US - A - 3 434 518
US - A - 3 884 423
US - A - 4 029 262
US - A - 4 100 612
US - A - 4 124 310
US - A - 4 135 828

ACTORUM AG

## Beschreibung

Die Erfindung betrifft eine Universalmaschine zum Zerkleinern, Kuttern, Mischen, Kneten, Emulgieren u. dgl. von Lebensmitteln, bestehend aus einer Schüssel kreisrunden Querschnitts, die in einem Traggestell um eine unter ihrem Schüsselboden horizontal angeordnete Kippwelle kippbar gelagert und in der gewünschten Kippstelle arretierbar ist und einen verschliessbaren Deckel sowie zentrisch umlaufende, an einem Werkzeugschaft befestigte Werkzeuge aufweist, die von einem am Schüsselboden angeflanschten und unterhalb der Kippwelle liegenden Motor angetrieben sind, für den seitlich an der Maschine eine Schalteinrichtung angeordnet ist.

Eine derartige Maschine ist in der Deutschen Patentschrift Nr. 965 776 beschrieben. Diese Maschinen werden seit vielen Jahren vielseitig eingesetzt, z. B. zur Verarbeitung von Fleisch, Gemüse, Obst, Herstellung von Knödelmassen, Teigen und Mayonnaise und Emulgieren von Suppen, Sossen und Salatdressings. Mit Zusatzgeräten lässt sich diese Universalmaschine auch zum Passieren, Reiben, Pürieren, Raspeln, Schnitzeln, Stifteln und Mahlen einsetzen. Dabei werden die Zusatzgeräte auf den Deckel der Schüssel gesteckt, die sich dann in einer 90°-Kippstellung befinden muss. Zur Unterstützung des gesamten Arbeitsprozesses ist bei derartigen Maschinen meist ein zentrisch im Schüsseldeckel gelagerter, in den Schüsselinnenraum ragender Transportflügel vorgesehen, der von aussen über eine Handkurbel betätigt werden kann (siehe z. B. Deutsche Patentschrift 965 109).

Das Traggestell ist als Rohr- bzw. Gussständer ausgebildet. Die Schalteinrichtung ist seitlich an der Schüssel befestigt, wobei die elektrischen Zuführleitungen vom Motor durch die hohl ausgebildete Kippwelle verlegt sind. Das Gehäuse der Schalteinrichtung ist zugleich als mechanisch wirkende Öffnungssperre für den Behälterdeckel ausgebildet. Der die Werkzeuge tragende Werkzeugschaft ist auf die durch den Schüsselboden geführte, in die Schüssel ragende Motorwelle aufgeschoben und mit dieser drehfest verbunden.

Die US-A-4 135 828 offenbart eine Mischmaschine für industrielle Zwecke. Die Maschine umfasst zwei lotrechte Ständer, zwischen denen ein scheibenförmiger Träger um eine horizontale Achse kippbar gelagert ist. Die Lagerung besteht aus je einem massiv ausgebildeten Zapfen, für den am oberen Ende der genannten Ständer jeweils ein Lager vorgesehen ist. Auf der Unterseite des scheibenförmigen Trägers ist ein Motor befestigt, dessen Abtriebswelle durch den scheibenförmigen Träger hindurchragt und Mischwerkzeuge trägt. Auf der Oberseite des scheibenförmigen Trägers ist ein Mischbehälter festgeklemmt, der topfförmig ausgebildet ist und mit seiner offenen Seite auf dem scheibenförmigen Träger aufliegt. Die zu mischenden Stoffe werden zuerst in den Mischbehälter gefüllt; der scheibenförmige Träger ist so um 180° verdreht, dass sich der genannte Motor oberhalb des Trägers befindet. In dieser Stellung lässt sich der Mischbehälter an der Unterseite des scheibenförmigen Trägers festklemmen, der dann um 180° gedreht wird, so dass der Mischbehälter oberhalb und der Motor unterhalb des scheibenförmigen Trägers liegen. An dem einen Ständer ist ein einen lichten Abstand von der Bodenplatte aufweisender Schaltschrank befestigt, der einen Betätigungsschalter für den genannten Motor aufweist. Die elektrischen Zuleitungen vom Motor zum Schaltschrank liegen frei und ausserhalb der Kipplagerung.

Der Erfindung liegt die Aufgabe zugrunde, die eingangs erläuterte Maschine hinsichtlich ihrer Handhabung zu vereinfachen und hinsichtlich ihrer Reinigungsmöglichkeiten zu verbessern.

Diese Aufgabe wird gemäss der Erfindung dadurch gelöst, dass die Schalteinrichtung in einem Schaltschrank untergebracht ist, der als Ständer für die Schüssel ausgebildet ist und die Lagerung für das eine Ende der Kippwelle aufnimmt, die hohl ausgebildet ist und die elektrischen Leitungen zum Motor aufnimmt.

Während die bisher vorgesehene Schalteinrichtung jeweils zusammen mit der Schüssel gekippt wurde, ist der neue Schaltschrank stationär angeordnet. Die Aussenwandungen dieses Schaltschrankes lassen sich glattflächig ausbilden, so dass die Reinigung, die bei Lebensmittelmaschinen eine besondere Rolle spielt, problemlos ausgeführt werden kann. Dabei ist es zweckmässig, wenn der Schaltschrank mit dem Bodenteil des Traggestells verschraubt und leicht austauschbar ist. Hierdurch lässt sich der Schaltschrank in einfacher Weise im Baukastenprinzip erweitern, wobei der Schaltschrank dann auch z. B. einen Getriebemotor umschliessen kann, der einen aus der der Schüssel abgewandten Schaltschrankwandung ragenden Antrieb für Zusatzgeräte aufweist, der unabhängig ist von dem am Schüsselboden angeflanschten Motor. Die Zusatzgeräte, die z. B. zum Schneiden und Würfeln von Gemüse und Kartoffeln dienen, lassen sich dann ohne Kippen der Schüssel in einfacher Weise und platzsparend seitlich am Schaltschrank anbringen. Dadurch ist es möglich, die Universalmaschine gleichzeitig mit den Zusatzgeräten zu betreiben, wobei eine Bedienungsperson mit der Grundmaschine arbeiten, z. B. Schneiden oder Emulgieren kann, während eine zweite Bedienungsperson parallel hierzu mit den Zusatzgeräten z. B. Pommes frites schneiden und würfeln kann.

Der Schaltschrank dient zur Aufnahme aller Einrichtungen zum Anfahren, Abbremsen u. dgl., wobei auch eine stufenlose Drehzahlregelung durch Frequenzregelung möglich ist. Dabei kann im Schaltschrank z. B. eine elektronische Bremseinrichtung für den Motor vorgesehen sein. Denkbar ist auch eine mechanische Motorbremse, die auf der B-Seite des Motors installiert wird, und für die auf der Unterseite des Motors ein zweites Motorwellenende herausgeführt wird. Diese z. B. als Scheibenbremse ausgebildete mechanische Bremse kann über eine Säule elektrisch angesteuert werden, wobei die elektrischen Zuleitungen ebenfalls durch die hohle Kippwelle zum Schaltschrank geführt werden. Soll die Universalmaschine mit einer Vakuumeinrichtung ausgerüstet werden, dann lässt sich die hierfür benötigte Vakuumpumpe mit Zubehör ebenfalls im Schaltschrank unterbringen.

Auf der Ober- bzw. Frontseite des Schaltschrankes sind die erforderlichen Schalter und Betriebsanzeigen vorgesehen. Dabei kann auch eine Tippschaltung für eine nur sehr kurze Laufdauer des die Werkzeuge antreibenden Motors vorgesehen werden. Eine derartige Schaltung ist z. B. für die Salatzerklenerung vorteilhaft; durch blosses Antippen eines entsprechenden Schalters wird dann der Antriebsmotor für nur wenige Sekunden in Gang gesetzt.

Zum Verschwenken des Schüsseldeckels kann an diesem ein Scharnierkasten angeschweisst sein, dem ein Schüssel-Scharnierkasten zugeordnet ist, in dem eine elektrische Deckelsicherung angeordnet ist. Zur Unterstützung des Öffnens des Schüsseldeckels kann eine Torsionsfeder vorgesehen sein, während die Deckelsicherung vorzugsweise aus einem nockengesteuerten Endschalter bestehen kann. Beim Öffnen des Deckels während des Arbeitsprozesses erfolgt somit automatisch ein Abschalten des Antriebsmotors. Die zum Scharnierkasten führenden elektrischen Leitungen sind vorzugsweise durch ein ausserhalb der Schüssel wasserdicht angeordnetes Kabelrohr geführt, das in die hohle Kippwelle mündet. Hierdurch ist eine geschützte Kabelverlegung bis in den Schaltkasten hinein gewährleistet. Dabei kann der Scharnierkasten so ausgebildet sein, dass er ggf. auch noch weitere Steuerteile aufzunehmen vermag.

Bei den vorbekannten Maschinen ist der Schüsseldeckel als Gussteil ausgebildet und damit nicht nur in seiner Herstellung besonders teuer, sondern auch hinsichtlich seiner Reinigung problematisch. Erfindungsgemäss kann der Schüsseldeckel aus einem Ziehteil aus Chromnickelstahl bestehen, das eine Ausstanzung aufweist, in die ein mit Durchsichtöffnungen versehenes Feingusssegment eingeschweisst ist, das lediglich auf seiner nach aussen weisenden Oberfläche einer nachträglichen Bearbeitung bedarf. In den Randbereich des Ziehteils kann ein im Querschnitt angenähert U-förmig ausgebildeter Ring zur Aufnahme einer Schnurdichtung eingeschweisst sein. Die zur Aufnahme der Schnurdichtung bestimmte Rinne dieses Ringes ist dabei überwiegend in radialer Richtung offen und lässt sich daher besonders einfach und zuverlässig reinigen; ausserdem ist ein einfaches Entfernen bzw. Einsetzen der Schnurdichtung gewährleistet.

Das Feingusssegment ist vorzugsweise durch einen aus transparentem Kunststoff bestehenden Schaudeckel verschliessbar, der zentrisch auf dem Schüsseldeckel verdrehbar gelagert ist. Dabei ist es vorteilhaft, wenn der Schaudeckel in seiner Schliessstellung mit einer Rundschnurdichtung spritzwasser- und vakuumdicht auf dem Feingusssegment aufliegt, das deshalb im Bereich dieser Fläche bearbeitet wird. Dabei ist es vorteilhaft, wenn der Schaudeckel in seiner geöffneten Stellung mit einer zentrischen Lagerbuchse auf eine

Nabe des Schüsseldeckels gesteckt ist, wobei ein Stift in eine lotrechte Nut eingreift und beim Drehen des Schaudeckels in seine Schliessstellung in einen in Umfangsrichtung verlaufenden Nutabschnitt eintaucht, der eine gewindegangähnliche, gegen den Schüsseldeckel gerichtete Steigung aufweist. Dabei können der Stift in der Lagerbuchse und die Nut in der Nabe des Schüsseldeckels oder aber umgekehrt, angeordnet sein. Durch Drehen des Schaudeckels in seine Schliessstellung wird der Schaudeckel zwangsläufig auf den Schüsseldeckel gedrückt. Hierdurch wird gewährleistet, dass der Schaudeckel immer dichtend auf dem Feingusssegment aufliegt.

Ferner ist es vorteilhaft, wenn sich eine Handkurbel für einen in der Schüssel angeordneten Transportflügel auf der Lagerbuchse des Schaudeckels abstützt. Für eine akkurate Reinigung der Maschine lässt sich – nach Entfernen der Handkurbel und des Transportflügels – der Schaudeckel durch Drehung in seine Offenstellung leicht nach oben abziehen. Ausserdem kann der Maschinenbetreiber die Rundschnurdichtung des Schaudeckels leicht herausnehmen, um dann den gesamten Schaudeckel in einer Reinigungsmaschine intensiv reinigen zu lassen.

Die erfindungsgemässe Gestaltung des Schüsseldeckels löst somit eine sehr komplexe Aufgabe: Einerseits sollen die genannten Durchsichtsöffnungen gross genug sein, um eine optische Kontrolle sowie eine Geruchskontrolle des aufzubereitenden Gutes sowie eine ggf. nachträglich erforderliche Einführung von Gewürzen oder sonstigen Zutaten zu ermöglichen. Andererseits sollen die Durchsichtöffnungen so verschliessbar sein, dass sie eine Beobachtung auch während der Bearbeitung des Gutes ermöglichen. Diese Schliessstellung muss spritzwasserdicht sein und eine Bearbeitung unter Vakuum zulassen. Ausserdem müssen die genannten Öffnungen mit ihrem Schaudeckel so konzipiert werden, dass eine leichte und zuverlässige Reinigung gewährleistet ist. Da die Maschine auch unter Vakuum arbeiten soll, muss der Schüsseldeckel eine entsprechende Steifigkeit aufweisen, die ein Einbeulen ausschliesst. Diesen Anforderungen werden das genannte Ziehteil sowie das Feingusssegment in besonders vorteilhafter Weise gerecht.

Der Schüsseldeckel weist vorzugsweise einen Exzenter-Kniehebel-Verschluss auf, der eine leicht herausziehbare, den Handhebel lagernde Drehachse aufweist, die in ihrer Arbeitslage z. B. durch ein abklappbares Achsende gesichert werden kann. Dadurch lässt sich der Handhebel zusammen mit dem an ihm angelenkten Kniehebel auch für Ungeübte schnell und einfach von dem Behälter lösen, wodurch ebenfalls den hygienischen Anforderungen entsprochen wird.

Die Arretierung für die Kippstellung der Schüssel kann aus einer feststehenden und einer mit der Kippwelle verbundenen Zahnscheibe bestehen, die durch Verstellung eines Spannhebels gegen die Wirkung einer Feder miteinander in Eingriff gebracht werden. Dadurch lässt sich die Schüssel nahezu stufenlos in der jeweils gewünschten Kippstellung arretieren.

Das freie Ende der durch den Schüsselboden in die Schüssel ragenden Antriebswelle kann, einen hinterschnittenen, nach oben offenen Radialschlitz aufweisen, in den ein Querbolzen des auf die Antriebswelle gesteckten Werkzeugschaftes eingreift, an dem Werkzeuge auswechselbar befestigt sind. Der Werkzeugschaft hängt also mit seinem Querbolzen in dem genannten Radialschlitz, dessen Hinterschneidung dazu führt, dass bereits eine leichte Relativverdrehung zwischen Werkzeugschaft und Antriebswelle zu einem Untergreifen durch den Querbolzen und damit zu einer axialen Fixierung des Werkzeugschaftes führt. Zu einer derartigen Relativverdrehung kommt es sowohl beim Anlaufen als auch beim Abbremsen des Antriebsmotors automatisch aufgrund der Trägheitskräfte sowie der von dem zu bearbeitenden Gut auf die Werkzeuge ausgeübten Reibungskräfte. Es ist somit nicht mehr nötig, den Werkzeugschaft von oben mit einer Mutter zu sichern.

Der Werkzeugschaft ist im Querschnitt vorzugsweise quadratisch ausgebildet. Hierdurch ergeben sich bei der Bearbeitung des in der Schüssel befindlichen Gutes vier Schleuderrippen. Dies ist insbesondere bei der Verarbeitung homogener Massen von Bedeutung, da diese dazu neigen, sich an dem lotrechten Werkzeugschaft anzuschmiegen und dadurch den Luftaustritt zu erschweren. Durch den schnell umlaufenden, im Querschnitt quadratischen Werkzeugschaft entsteht hingegen ein von der aufzubereitenden Masse freier, den Werkzeugschaft ringförmig umgebender Kanal, der eine permanente Entlüftung der aufzubereitenden Masse gewährleistet.

Der Werkzeugschaft besteht vorzugsweise aus einem im Querschnitt quadratischen Rohr aus Chromnickelstahl, das über eine Buchse gesteckt und mit deren Enden verschweisst ist. Diese langgestreckte Buchse lässt sich preiswert herstellen, da sie lediglich vorgedreht zu werden braucht. An das obere Ende dieser langgestreckten Buchse kann eine aus Feinguss bestehende kürzere Buchse angeschweisst sein, die den oben erwähnten Querbolzen aufweist und mit dem quadratischen Stahlrohr verschweisst wird. Auf das untere Ende der langgestreckten Buchse kann ein Vierkantring aufgeschoben werden, der ebenfalls mit dem quadratischen Rohr verschweisst wird. Ausserdem kann das untere Ende der langgestreckten Buchse mit einem Aussengewinde versehen sein, auf das eine die Werkzeuge festlegende Spannmutter geschraubt ist, die auf ihrem Aussenmantel mit Schleuderflügeln versehen ist. Dadurch lassen sich die Werkzeuge in einfacher Weise auswechseln, so dass der Betreiber der Maschine die Möglichkeit hat, mit nur einem einzigen Werkzeugschaft unterschiedliche Werkzeuge einzusetzen. Der erfindungsgemässe Werkzeugschaft weist somit keinerlei Spalte, Fugen od. dgl. auf und entspricht daher ganz besonders den strengen hygienischen Anforderungen an eine Lebensmittelaufbereitungsmaschine.

Das Traggestell der Maschine besteht vorzugsweise aus einem U-förmigen, horizontal angeordneten Bodenteil, das aus im Querschnitt quadratischen Rohren zusammengeschweisst ist. Dieses Bodenteil kann zumindest zwei im Querschnitt quadratische Füsse aufweisen, in die jeweils ein mit einer Rolle bestückter Hartgummipuffer eingesetzt ist. Dadurch lässt sich je nach Wunsch des Betreibers die Achslage der vorzugsweise aus Nylon bestehenden Rollen verändern, so dass die Maschine wahlweise nach vorn oder hinten oder aber seitlich verschoben werden kann. Das dem Schaltschrank abgewandte Ende der Kippwelle kann im oberen Ende eines freien Ständers gelagert sein, der von einem hinteren Befestigungspunkt am Bodenteil des Traggestells frei schräg nach vorn ragt und vorzugsweise ebenfalls aus einem Vierkantrohr besteht. Das U-förmige, nach hinten offene Bodenteil ermöglicht ein freies Verschwenken des unter der Schüssel hängenden Motors nach hinten. In dem dem Schaltschrank abgewandten vorderen Eckbereich des Bodenteils ist für einen Werkzeugschaft eine Aufnahme vorgesehen, die in ihrer Ausbildung dem freien Ende der in die Schüssel ragenden Motorwelle entspricht. Der um 180° gedrehte Werkzeugschaft kann mit seinem nunmehr unten liegenden Querbolzen auf die mit einem Radialschlitz versehene Aufnahme gesteckt werden, die dadurch als Schlüssel wirkt, so dass die Bedienungsperson in einfacher Weise das jeweilige Werkzeug vom Werkzeugschaft lösen kann.

In der Zeichnung sind einige als Beispiele dienende Ausführungsformen der Erfindung dargestellt. Es zeigen:

Fig. 1 eine Universalküchenmaschine in Vorderansicht, zum Teil im Längsschnitt;

Fig. 2 die linke Seite der Darstellung gemäss Fig. 1 in Stirnansicht;

Fig. 3 die rechte Seite der Darstellung gemäss Fig. 1 in Stirnansicht und zum Teil im Querschnitt;

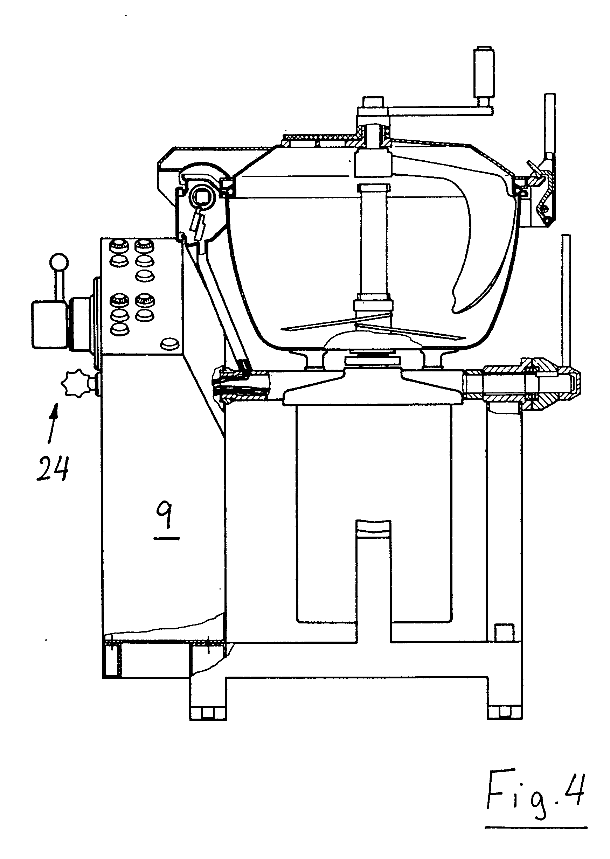

Fig. 4 eine mit einem erweiterten Schaltschrank ausgestattete Universalküchenmaschine in einer Darstellung gemäss Fig. 1;

Fig. 5 die Vorrichtung gemäss Fig. 4 in einer Darstellung gemäss Fig. 2;

Fig. 6 die Vorrichtung gemäss Fig. 4 in einer Darstellung gemäss Fig. 3;

Fig. 7 der in den Fig. 1 bis 6 dargestellte Schüsseldeckel in Draufsicht;

Fig. 8 einen Querschnitt durch den Schüsseldeckel gemäss Fig. 7;

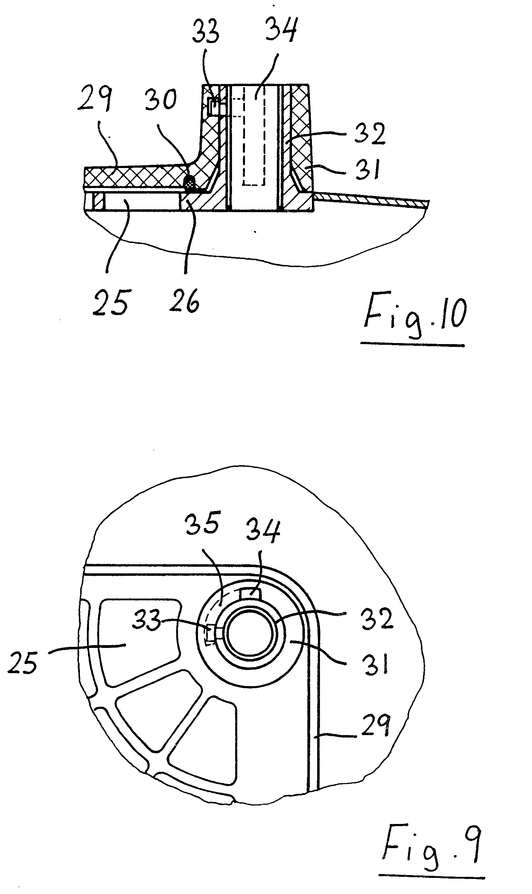

Fig. 9 in vergrössertem Massstab einen Ausschnitt der Fig. 7;

Fig. 10 in vergrössertem Massstab einen Ausschnitt der Fig. 8;

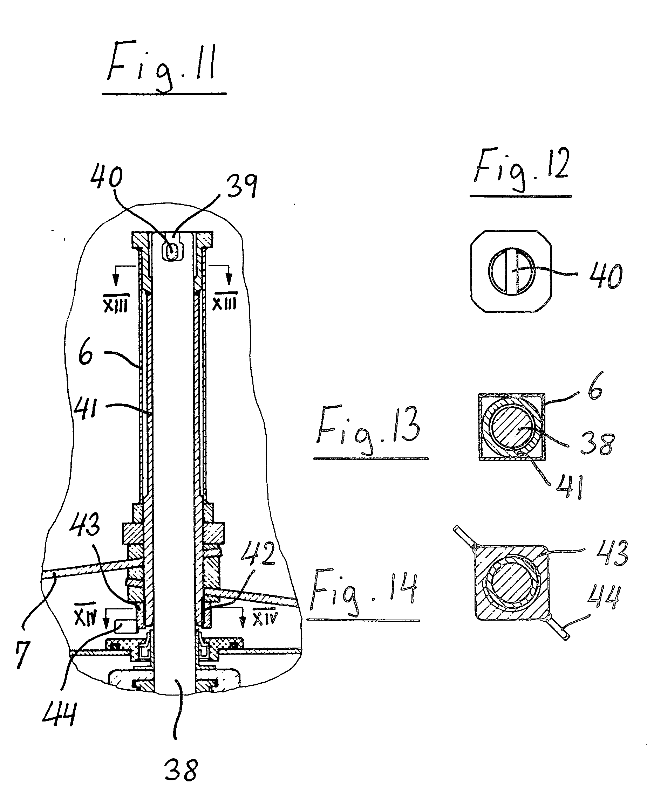

Fig. 11 einen lotrechten Schnitt durch den in den Fig. 1 und 4 dargestellten Werkzeugschaft;

Fig. 12 eine Draufsicht auf den Werkzeugschaft gemäss Fig. 11;

Fig. 13 einen Schnitt gemäss der Linie XIII–XIII in Fig. 11 und

Fig. 14 einen Schnitt gemäss der Linie XIV–XIV in Fig. 11.

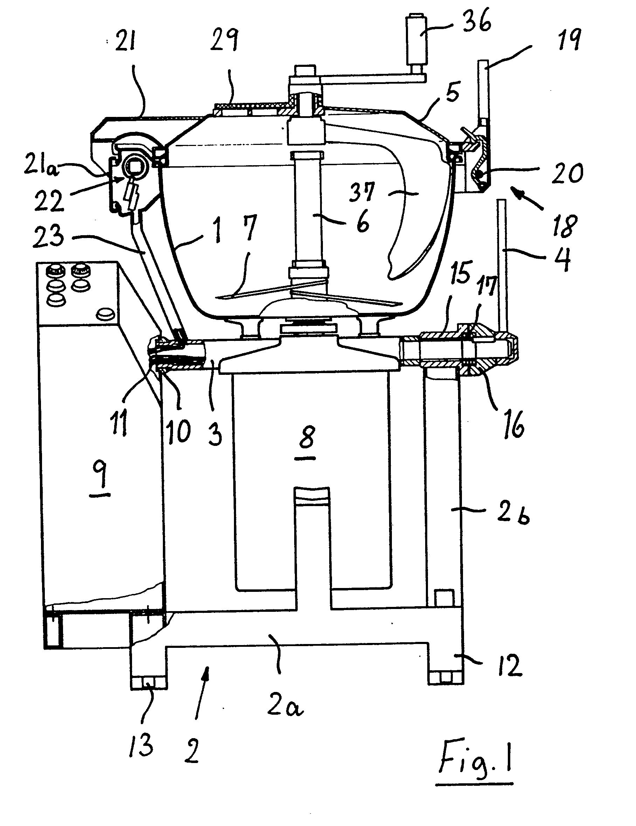

Die in Fig. 1 dargestellte Universalküchenmaschine besteht aus einer Schüssel 1 kreisrunden Querschnitts, die in einem Traggestell 2 um eine unter ihrem Schüsselboden horizontal angeordnete Kippwelle 3 kippbar gelagert und in der gewünschten Kippstellung durch einen Spannhebel 4 arretierbar ist. Die Maschine weist ferner einen verschliessbaren Deckel 5 sowie zentrisch umlaufende, an einem Werkzeugschaft 6 befestigte Werkzeuge 7 auf, die von einem am Schüsselboden angeflanschten und unterhalb der Kippwelle 3 liegenden Motor 8 angetrieben sind. Die Schalteinrichtung für den Motor 8 ist seitlich in einem Schaltschrank 9 untergebracht, der als Ständer für die Schüssel 1 ausgebildet ist und die Lagerung 10 für das eine Ende der Kippwelle 3 aufnimmt, die hohl ausgebildet ist und die elektrischen Leitungen 11 zum Motor 8 aufnimmt. Der Schaltschrank 9 ist mit dem Bodenteil 2a des Traggestells 2 verschraubt und daher leicht austauschbar.

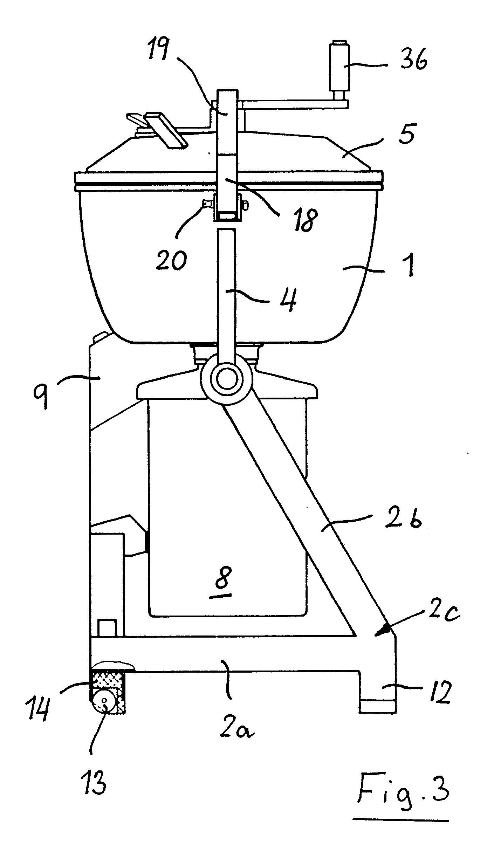

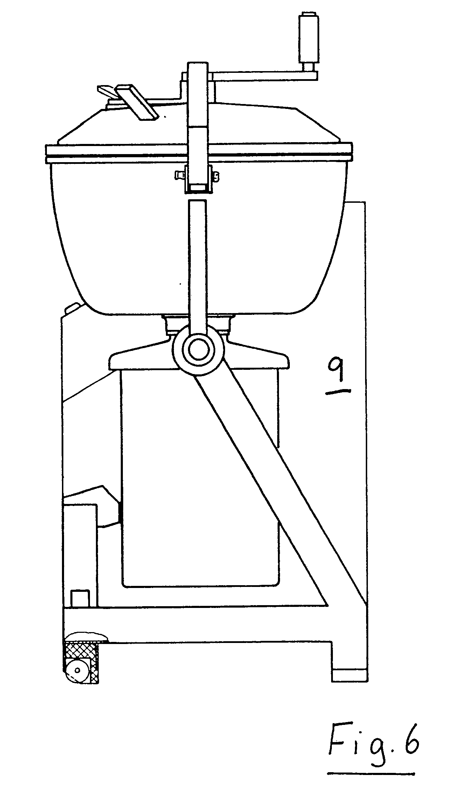

Das andere Ende der Kippwelle 3 ist im oberen Ende eines freien Ständers 2b gelagert, der von einem hinteren Befestigungspunkt 2c am Bodenteil 2a des Traggestells frei schräg nach vorn ragt. Das Bodenteil 2a des Traggestells 2 weist ferner zwei im Querschnitt quadratische Füsse 12 auf, in die jeweils ein mit einer Rolle 13 bestückter Hartgummipuffer 14 eingesetzt ist (siehe Fig. 3 und 6).

Die Arretierung für die Kippstellung der Schüssel 1 besteht aus einer feststehenden Zahnscheibe 15 und einer mit der Kippwelle 3 verbundenen Zahnscheibe 16, die durch Verstellung des Spannhebels 4 gegen die Wirkung einer Feder 17 miteinander in Eingriff gebracht werden.

Der Schüsseldeckel 5 weist einen Exzenter-Kniehebel-Verschluss 18 auf, der eine leicht herausziehbare, den Handhebel 19 lagernde Drehachse 20 aufweist. An den Schüsseldeckel 5 ist ein Scharnierkasten 21 angeschweisst, der mit einem an der Schüssel 1 befestigten Scharnierkasten 21a zusammenwirkt, in dem eine elektrische Deckelsicherung 22 angeordnet ist, deren elektrische Leitungen durch ein ausserhalb der Schüssel 1 wasserdicht angeordnetes Kabelrohr 23 geführt sind, das in die hohle Kippwelle 3 mündet.

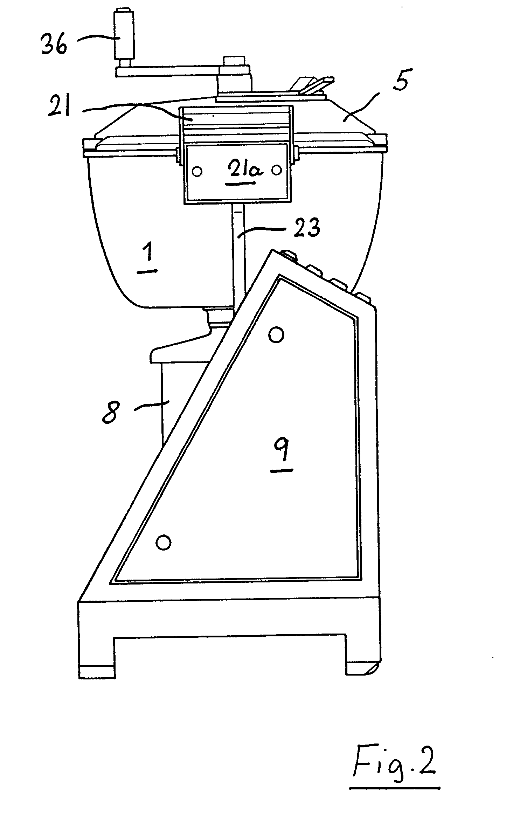

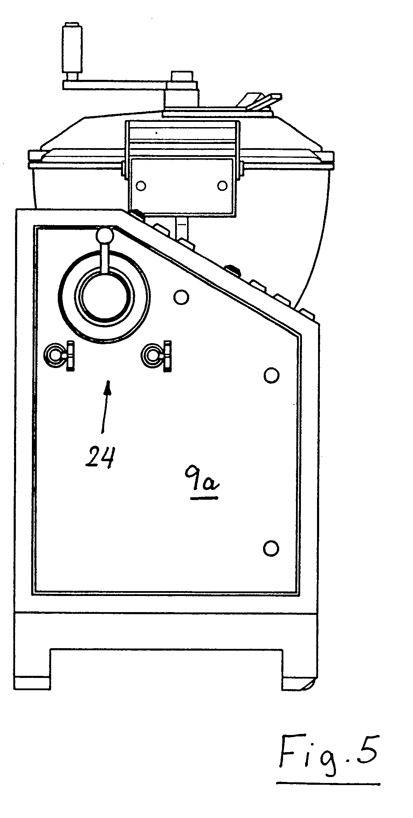

Die in den Fig. 1 bis 3 dargestellte Universalküchenmaschine ist mit einem verhältnismässig kleinen Schaltschrank 9 ausgerüstet. Die Fig. 5 bis 6 zeigen eine Maschine mit einem vergrösserten Schaltschrank 9, der einen Getriebemotor umschliesst, der einen aus der Schüssel 1 abgewandten Schaltschrankwandung 9a ragenden Antrieb 24 für Zusatzgeräte aufweist, der unabhängig ist von dem am Schüsselboden angeflanschten Motor 8.

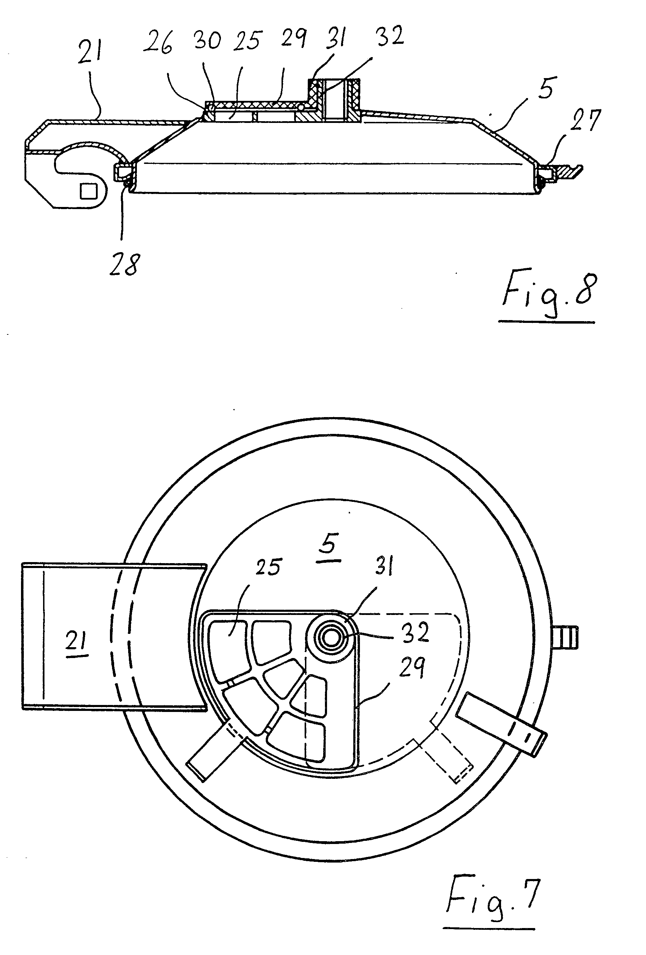

Der Schüsseldeckel 5 besteht aus einem Ziehteil aus Chromnickelstahl, das eine Ausstanzung aufweist, in die ein mit Durchsichtöffnungen 25 versehenes Feingusssegment 26 eingeschweisst ist. In den Randbereich des Ziehteils ist ein im Querschnitt angenähert U-förmig ausgebildeter Ring 27 zur Aufnahme einer Schnurdichtung 28 eingeschweisst (siehe Fig. 8).

Das Feingusssegment 26 ist durch einen aus transparentem Kunststoff bestehenden Schaudeckel 29 verschliessbar, der zentrisch auf dem Schüsseldeckel 5 verdrehbar gelagert ist und in seiner Schliessstellung mit einer Rundschnurdichtung 30 spritzwasser- und vakuumdicht auf dem Feingusssegment 26 aufliegt. Der Schaudeckel 29 wird in seiner geöffneten Stellung (siehe gestrichelte Darstellung in Fig. 7) mit einer zentrischen Lagerbuchse 31 auf eine Nabe 32 des Schüsseldeckels 5 gesteckt, wobei ein Stift 33 in eine lotrechte Nut 34 eingreift und beim Drehen des Schaudeckels 29 in seine Schliessstellung (siehe ausgezogene Darstellung in Fig. 7) in einen in Umfangsrichtung verlaufenden Nutabschnitt (35) eintaucht, der eine gewindegangähnliche, gegen den Schüsseldeckel 5 gerichtete Steigung aufweist. Eine Handkurbel 36 für einen in der Schüssel 1 angeordneten Transportflügel 37 stützt sich auf der Lagerbuchse 31 des Schaudeckels 29 ab.

Das freie Ende der durch den Schüsselboden in die Schüssel 1 ragenden Antriebswelle 38 des Motors 8 weist einen hinterschnittenen, nach oben offenen Radialschlitz 39 auf, in den ein Querbolzen 40 des auf die Antriebswelle 38 gesteckten Werkzeugschaftes 6 eingreift. Der Werkzeugschaft 6 besteht aus einem im Querschnitt quadratischen Stahlrohr, das über eine Buchse 41 gesteckt und mit deren Enden verschweisst ist. Das untere Ende der Buchse 41 ist mit einem Aussengewinde 42 versehen, auf das eine die Werkzeuge 7 festlegende Spannmutter 43 geschraubt ist, die auf ihrem Aussenmantel mit Schleuderflügeln 44 versehen ist.

**Patentansprüche**

1. Universalmaschine zum Zerkleinern, Kuttern, Mischen, Kneten, Emulgieren u. dgl. von Lebensmitteln, bestehend aus einer Schüssel (1) kreisrunden Querschnitts, die in einem Traggestell (2) um eine unter ihrem Schüsselboden horizontal angeordnete Kippwelle (3) kippbar gelagert und in der gewünschten Kippstellung arretierbar ist und einen verschliessbaren Deckel (5) sowie zentrisch umlaufende, an einem Werkzeugschaft (6) befestigte Werkzeuge (7) aufweist, die von einem am Schüsselboden angeflanschten und unterhalb der Kippwelle (3) liegenden Motor (8) angetrieben sind, für den seitlich an der Maschine eine Schalteinrichtung angeordnet ist, dadurch gekennzeichnet, dass die Schalteinrichtung in einem Schaltschrank (9) untergebracht ist, der als Ständer für die Schüssel (1) ausgebildet ist und die Lagerung (10) für das eine Ende der Kippwelle (3) aufnimmt, die hohl ausgebildet ist und die elektrische Leitungen (11) zum Motor (8) aufnimmt.

2. Maschine nach Anspruch 1, dadurch gekennzeichnet, dass der Schaltschrank (9) mit dem Bodenteil (2a) des Traggestells (2) verschraubt ist.

3. Maschine nach Anspruch 1 oder 2, dadurch gekennzeichnet, dass der Schaltschrank (9) einen Getriebemotor umschliesst, der einen aus der Schüssel (1) abgewandten Schaltschrankwandung (9a) ragenden Antrieb (24) für Zusatzgeräte aufweist, der unabhängig ist von dem am Schüsselboden angeflanschten Motor (8).

4. Maschine nach Anspruch 1, 2 oder 3, dadurch gekennzeichnet, dass im Schaltschrank (9) eine elektronische Bremseinrichtung für den Motor (8) vorgesehen ist.

5. Maschine nach einem der vorhergehenden Ansprüche, dadurch gekennzeichnet, dass das andere Ende der Kippwelle (3) im oberen Ende eines freien Ständers (2b) gelagert ist, der von einem hinteren Befestigungspunkt (2c) am Bodenteil (2a) des Traggestells (2) frei schräg nach vorn ragt.

6. Maschine nach einem der vorhergehenden Ansprüche, dadurch gekennzeichnet, dass der Schüsseldeckel (5) aus einem Ziehteil aus Chromnickelstahl besteht, das eine Ausstanzung aufweist, in die ein mit Durchsichtöffnungen (25) versehenes Feingusssegment (26) eingeschweisst ist.

7. Maschine nach Anspruch 6, dadurch gekennzeichnet, dass an das Ziehteil ein Scharnierkasten (21) angeschweisst ist.

8. Maschine nach Anspruch 6 oder 7, dadurch gekennzeichnet, dass in den Randbereich des Ziehteils ein im Querschnitt angenähert U-förmig ausgebildeter Ring (27) zur Aufnahme einer Schnurdichtung (28) eingeschweisst ist.

9. Maschine nach Anspruch 6, 7 oder 8, dadurch gekennzeichnet, dass das Feingusssegment (26) durch einen aus transparentem Kunststoff bestehenden Schaudeckel (29) verschliessbar ist, der zentrisch auf dem Schüsseldeckel (5) verdrehbar gelagert ist.

10. Maschine nach Anspruch 9, dadurch gekennzeichnet, dass der Schaudeckel (29) in seiner Schliessstellung mit einer Rundschnurdichtung (30) spritzwasser- und vakuumdicht auf dem Feingusssegment (26) aufliegt.

11. Maschine nach Anspruch 9 oder 10, dadurch gekennzeichnet, dass der Schaudeckel (29) in seiner geöffneten Stellung mit einer zentrischen Lagerbuchse (31) auf einer Nabe (32) des Schüsseldeckels (5) gesteckt ist, wobei ein Stift (33) in eine lotrechte Nut (34) eingreift und beim Drehen des Schaudeckels (29) in seine Schliessstellung in einen in Umfangsrichtung verlaufenden Nutabschnitt (35) eintaucht, der eine gewindegangähnliche, gegen den Schüsseldeckel (5) gerichtete Steigung aufweist.

12. Maschine nach Anspruch 11, dadurch gekennzeichnet, dass sich eine Handkurbel (36) für einen in der Schüssel (1) angeordneten Transportflügel (37) auf der Lagerbuchse (31) des Schaudeckels (29) abstützt.

13. Maschine nach Anspruch 12, dadurch gekennzeichnet, dass der Transportflügel (37) aus Kunststoff besteht.

14. Maschine nach einem der Ansprüche 7 bis 13, dadurch gekennzeichnet, dass in einem dem Deckel-Scharnierkasten (21) zugeordneten Schüssel-Scharnierkasten (21a) eine elektrische Deckelsicherung (22) angeordnet ist, deren elektrische Leitungen durch ein ausserhalb der Schüssel (1) wasserdicht angeordnetes Kabelrohr (23) geführt sind, das in die hohle Kippwelle (3) mündet.

15. Maschine nach einem der vorhergehenden Ansprüche, dadurch gekennzeichnet, dass der Schüsseldeckel (5) einen Exzenter-Kniehebel-Verschluss (18) aufweist, der eine leicht herausziehbare, den Handhebel (19) lagernde Drehachse (20) aufweist.

16. Maschine nach einem der vorhergehenden Ansprüche, dadurch gekennzeichnet, dass die Arretierung für die Kippstellung der Schüssel (1) aus einer feststehenden und einer mit der Kippwelle (3) verbundenen Zahnscheibe (15, 16) besteht, die durch Verstellung eines Spannhebels (4) gegen die Wirkung einer Feder (17) miteinander in Eingriff gebracht werden.

17. Maschine nach einem der vorhergehenden Ansprüche, dadurch gekennzeichnet, dass das freie Ende der durch den Schüsselboden in die Schüssel (1) ragenden Antriebswelle (38) einen hinterschnittenen, nach oben offenen Radialschlitz (39) aufweist, in den ein Querbolzen (40) des auf die Antriebswelle (38) gesteckten Werkzeugschaftes (6) eingreift, an dem Werkzeuge (7) auswechselbar befestigt sind.

18. Maschine nach einem der vorhergehenden Ansprüche, dadurch gekennzeichnet, dass der Werkzeugschaft (6) im Querschnitt quadratisch ausgebildet ist.

19. Maschine nach Anspruch 18, dadurch gekennzeichnet, dass der Werkzeugschaft (6) aus einem im Querschnitt quadratischen Stahlrohr besteht, das über eine Buchse (41) gesteckt und mit deren Enden verschweisst ist.

20. Maschine nach Anspruch 19, dadurch gekennzeichnet, dass das untere Ende der Buchse (41) mit einem Aussengewinde (42) versehen ist, auf das eine die Werkzeuge (7) festlegende Spannmutter (43) geschraubt ist, die auf ihrem Aussenmantel mit Schleuderflügeln (44) vesehen ist.

21. Maschine nach einem der vorhergehenden Ansprüche, dadurch gekennzeichnet, dass das Bodenteil (2a) des Traggestells (2) zumindest zwei im Querschnitt quadratische Füsse (12) aufweist, in die jeweils ein mit einer Rolle (13) bestückter Hartgummipuffer (14) eingesetzt ist.

## Claims

1. Multi-purpose machine for the comminution, chopping, mixing, kneading, emulsification and the like of foodstuffs, consisting of a bowl (1) of round cross-section which is mounted in a supporting frame (2) so as to allow tilting about a tilt shaft (3) arranged horizontally beneath the bottom of the bowl and can be locked in the desired tilted position and comprises a lockable lid (5) as well as centrally rotating tools (7) which are attached to a tool shank (6) and which are driven by a motor (8) flanged onto the bottom of the bowl and located underneath the tilt shaft (3), for which motor (8) a switching device is disposed on the side of the machine, characterised in that the switching device is accomodated in a switch cabinet (9) which is designed as a stand for the bowl (1) and receives the mounting (10) for one end of the tilt shaft (3), which is hollow and receives the electrical wires (11) leading to the motor (8).

2. Machine according to claim 1, characterised in that the switch cabinet (9) is bolted to the bottom portion (2a) of the supporting frame (2).

3. Machine according to claim 1 or 2, characterised in that the switch cabinet (9) includes a gear motor which comprises a drive mechanism (24) for auxiliary equipment, which protrudes from the switch cabinet wall (9a) remote from the bowl (1) and which is independent of the motor (8) flanged onto the bottom of the bowl.

4. Machine according to claim 1, 2 or 3, characterised in that an electronic braking device for the motor (8) is provided in the switch cabinet (9).

5. Machine according to any of the preceding claims, characterised in that the other end of the tilt shaft (3) is mounted in the upper end of a free stand (2b) which extends obliquely forwards freely from a rear mounting point (2c) on the bottom portion (2a) of the supporting frame (2).

6. Machine according to any of the preceding claims, characterised in that the bowl lid (5) consists of a drawn component made of chrome nickel steel which comprises a punched-out region into which is welded a high-quality cast segment (26) provided with inspection openings (25).

7. Machine according to claim 6, characterised in that a hinge box (21) is welded onto the drawn component.

8. Machine according to claim 6 or 7, characterised in that into the edge region of the drawn component is welded a ring (27) of approximately U-shaped cross-section for receiving a cord-type seal (28).

9. Machine according to claim 6, 7 or 8, characterised in that the high-quality cast segment (26) can be closed by a transparent plastic inspection lid (29) which is mounted centrally and rotatably on the bowl lid (5).

10. Machine according to claim 9, characterised in that the inspection lid (29) in its closed position rests on the high-quality cast segment (26) by an O-ring (30) in splash-tight and vacuum-tight relationship.

11. Machine according to claim 9 or 10, characterised in that the inspection lid (29) in its open position is placed by a central bearing bush (31) on a hub (32) of the bowl lid (5), wherein a pin (33) engages in a vertical groove (34) and, on rotation of the inspection lid (29) into its closed position, passes into a groove section (35) which extends in the circumferential direction and which has a thread-like pitch directed towards the bowl lid (5).

12. Machine according to claim 11, characterised in that a crank handle (36) for a feeder blade (37) disposed in the bowl (1) is supported on the bearing bush (31) of the inspection lid (29).

13. Machine according to claim 12, characterised in that the feeder blade (37) is made of plastic.

14. Machine according to any of claims 7 to 13, characterised in that in a bowl hinge box (21a) associated with the lid hinge box (21) is disposed a lid fuse (22) whose electrical wires pass through a cable duct (23) which is arranged watertightly outside the bowl (1) and which leads into the hollow tilt shaft (3).

15. Machine acording to any of the preceding claims, characterised in that the bowl lid (5) comprises a cam and toggle lever lock (18) which comprises a readily removable pivot pin (20) which bears the end lever (19).

16. Machine according to any of the preceding claims, characterised in that the locking means for the tilted position of the bowl (1) consists of two crown gears (15, 16), one stationary and one connected to the tilt shaft (3), which are engaged with each other against the action of a spring (17) by displacement of a clamping lever (4).

17. Machine according to any of the preceding claims, characterised in that the free end of the drive shaft (38) extending through the bottom of the bowl into the bowl (1) comprises an undercut, upwardly opening, radial slot (39) in which engages a transverse pin (40) of the tool shank (6) which is fitted onto the drive shaft (38) and to which tools (7) are attached interchangeably.

18. Machine according to any of the preceding claims, characterised in that the tool shank (6) is of square cross-section.

19. Machine according to claim 18, characterised in that the tool shank (6) consists of a steel tube of square cross-section which is fitted over a bush (41) and welded to its ends.

20. Machine according to claim 19, characterised in that the lower end of the bush (41) is provided with an external thread (42) onto which is screwed a lock nut (43) which fixes the tools (7) and which is provided with wings (44) on its outer wall.

21. Machine according to any of the preceding claims, characterised in that the bottom portion (2a) of the supporting frame (2) comprises two or more feet (12) of square cross-section in each of which is inserted a hard rubber buffer (14) equipped with a castor (13).

**Revendications**

1. Machine universelle pour hacher, trancher, mélanger, prétrir, émulsionner etc. des denrées alimentaires, constituée d'une cuve (1) de section circulaire, qui est monté dans un cadre porteur (2) de façon à pouvoir basculer sur un axe de basculement horizontal (3) disposé sous le fond de la cuve et qui est blocable dans la position de basculement désirée, et présente un couvercle verrouillable (5) ainsi que des outils (7) tournant centralement, fixés sur un arbre porte-outil (6) et entraînés par un moteur (8) bridé au fond de cuve et situé au-dessous de l'axe de basculement (3), un dispositif de commande électrique du moteur étant disposé latéralement relativement à la machine, caractérisée en ce que le dispositif de commande électrique est logé dans une armoire de commande (9) qui constitue un support pour la cuve (1) et contient le palier (10) pour l'une des extrémités de l'axe de basculement (3), lequel est creux et reçoit les conducteurs électriques (11) allant au moteur (8).

2. Machine conforme à la revendication 1, caractérisée en ce que l'armoire de commande (9) est vissée avec la partie formant semelle (2a) du cadre porteur (2).

3. Machine conforme à l'une des revendications 1 ou 2, caractérisée en ce que l'armoire de commande (9) contient un motoréducteur qui présente un entraînement (24) pour accessoires qui fait saillie sur l'armoire de commande par sa paroi (9a) opposée à la cuve (1), et est indépendant du moteur (8) bridé au fond de cuve.

4. Machine conforme à l'une des revendications 1 à 3, caractérisée en ce qu'il est prévu dans l'armoire de commande (9) un dispositif de freinage électronique pour le moteur (8).

5. Machine conforme à l'une des revendications précédentes, caractérisée en ce que l'autre extrémité de l'axe de basculement (3) est supportée dans l'extrémité supérieure d'un montant libre (2b), lequel s'élève librement, obliquement et vers l'avant, à partir d'un point de fixation arrière (2c) à la partie formant semelle (2a) du cadre porteur (2).

6. Machine conforme à l'une des revendications précédentes, caractérisée en ce que le couvercle de cuve (5) est constitué d'une pièce emboutie en acier au chromenickel qui présente une découpe dans laquelle est soudée une pièce (26) de fonte fine prévue avec des ouvertures (25) permettant d'inspecter l'intérieur de la cuve.

7. Machine conforme à la revendication 6, caractérisée en ce qu'un boîtier à charnière (21) est soudé à la pièce emboutie.

8. Machine conforme à l'une des revendications 6 ou 7, caractérisée en ce qu'un anneau (27) qui, vu en coupe, présente approximativement la forme d'un U, est soudé dans la région du bord de la pièce emboutie pour recevoir un joint de serrage (28).

9. Machine conforme à l'une des revendications 6, 7 ou 8, caractérisée en ce que la pièce (26) de font fine est obturable par un couvercle-regard (29) réalisé en matière plastique transparente qui est monté centralement sur le couvercle de cuve (5) de manière ce qu'on puisse le faire tourner.

10. Machine conforme à la revendication 9, caractérisée en ce que le couvercle-regard (29), dans sa position de fermeture, repose sur la pièce (26) par un joint torique (30) étanche à l'eau projetée et au vide.

11. Machine conforme à l'une des revendications 9 ou 10, caractérisée en ce que, dans sa position d'ouverture, le couvercle-regard (29) est introduit par une douille de pivotement centrale (31) sur un moyeu (32) du couvercle de cuve (5), tandis qu'un tenon (33) est engagé dans une rainure verticale (34) et par rotation du couvercle-regard (29) vers sa position de fermeture s'engage dans un tronçon de rainure (35) s'étendant dans la direction périphérique et présentant une pente analogue à un pas de vis dirigée vers le couvercle de cuve (5).

12. Machine conforme à la revendication 11, caractérisée en ce qu'une manivelle (36) pour une pale d'entraînement (37) disposée dans la cuve (1) s'appuie sur la douille de pivotement (31) du couvercle-regard (29).

13. Machine conforme à la revendication 12, caractérisée en ce que le pale d'entraînement (37) est en matière plastique.

14. Machine conforme à l'une des revendications 7 à 13, caractérisée en ce qu'un coupe-circuit électrique du couvercle (22) est disposé dans un boîtier à charnière de la cuve (21a) associé au boîtier à charnière du couvercle (21), les conducteurs électriques de ce coupe-circuit cheminant dans un conduit pour câble (23) étanche à l'eau et disposé à l'extérieur de la cuve (1), ce conduit débouchant dans l'axe creux de basculement (3).

15. Machine conforme à l'une des revendications précédentes, caractérisée en ce que le couvercle du cuve (5) présente une fermeture à levier à genouillière à excentrique (18) ayant un axe de pivotement (20) facile à extraire supportant le levier manuel (19).

16. Machine conforme à l'une des revendications précédentes, caractérisée en ce que le dispositif de blocage pour la position de basculement de la cuve (1) comprend des disques dentés (15, 16), l'un immobile et l'autre relié à l'axe de basculement (3), ces disques engrenant l'un avec l'autre, à l'encontre de l'action d'un ressort (17), par déplacement d'un levier de serrage (4).

17. Machine conforme à l'une des revendications précédentes, caractérisée en ce que l'extrémité libre de l'arbre moteur (38) qui fait saillie dans la cuve (1) à travers le fond de celle-ci présente une fente radiale (39) en contre-dépouille et s'ouvrant vers le haut, dans laquelle est engagée une broche transversale (40) de l'arbre porte-outil (6), qui est monté sur l'arbre moteur (38) et sur lequel les outils (7) sont fixés de manière interchangeable.

18. Machine conforme à l'une des revendications précédentes, caractérisée en ce que l'arbre porte-outil (6) a, vue en coupe transversale, une forme carrée.

19. Machine conforme à la revendication 18, caractérisée en ce que l'arbre porte-outil (6) est constitué d'un tube en acier de section transversale carrée, monté sur une douille (41) et soudé aux extrémités de celle-ci.

20. Machine conforme à la revendication 19, caractérisée en ce que l'extrémité inférieure de la douille (41) est munie d'un filetage extérieur (42) sur lequel est vissé en écrou de serrage (43) qui immobilise les outils (7), cet écrou étant muni sur sa face extérieure d'ailettes de centrifugation (44).

21. Machine conforme à l'une des revendications précédentes, caractérisée en ce que la partie formant semelle (2a) du cadre support (2) présente au moins deux pieds (12) de section transversale carrée, dans chacun desquels est disposé un tampon en caoutchouc dur (14) muni d'un galet (13).

Fig. 1

Fig.2

Fig.3

24

9

Fig.4

24

9a

Fig.5

Fig. 6

21 26 30 25 29 31 32

21 5 27

28

_Fig.8_

5

25 31

21 32

29

_Fig.7_

33  34

29  30

32

31

25  26

*Fig. 10*

35  34

33

32

31

25

29

*Fig. 9*

Fig. 11

Fig. 12

Fig. 13

Fig. 14